# EUROPÄISCHE PATENTSCHRIFT

(11) **EP 1 494 337 B1**
(45) Veröffentlichungstag und Bekanntmachung des Hinweises auf die Patenterteilung: **21.07.2010**
(21) Anmeldenummer: 04005087.4
(22) Anmeldetag: 04.03.2004
(51) Int. Cl.: H02K 15/04, H02K 3/50

(54) **Verfahren zum Herstellen einer zweischichtigen Schleifenwicklung**
Method for manufacturing a two layers winding
Méthode de fabrication d'un enroulement à deux étages

(30) Priorität: 30.06.2003 DE 10329576
(43) Veröffentlichungstag der Anmeldung: 05.01.2005
(73) Patentinhaber: ROBERT BOSCH GMBH, 70442 Stuttgart (DE)
(72) Erfinder: Kreuzer, Helmut, 71701 Schwieberdingen (DE); Rau, Eberhard, 70825 Korntal-Muenchingen (DE); Bezner, Reinhard, 74376 Gemmrigheim (DE)

(56) Entgegenhaltungen:
- WO-A-91/09449
- US-A- 5 197 180

## Beschreibung

### Stand der Technik

Aus der US 5,197,180 ist ein Herstellungsverfahren für eine zweischichtige Schleifenwicklung bekannt, zu deren Herstellung ein sogenannter Wickelbalken verwendet wird. Die Abfolge der einzelnen Wicklungsschritte zur Herstellung dieser dreiphasigen Wicklung ist derart, dass sämtliche Schleifenverbinder außerhalb der Wickelköpfe angeordnet sind. Eine derartige Anordnung der Schleifenverbinder außerhalb der Wickelköpfe ist besonders dann von Nachteil, wenn, wie für Generatoren allgemein üblich, die Wickelköpfe durch Kühlluft umströmt werden. Derartig außen liegenden Schleifenverbinder stellen eine Unsymmetrie an der Oberfläche der Wickelköpfe dar, so dass hier Geräusch erzeugende Strömungsablösungen die Folge sind und demzufolge die Seite der Wicklung kritisch ist, an der die Schleifenverbinder angeordnet sind. Des weiteren ist von Nachteil, dass derartige Schleifenverbinder einen Teil der Drähte des Wickelkopfes abdecken und demzufolge nur vermindert Kühlluft an diese Bereiche herantreten kann. In der Folge ist die Kühlwirkung an diesen Stellen verschlechtert, wodurch die Temperatur steigt, die Strombelastbarkeit der Wicklung sinkt und der Gesamtwirkungsgrad der Maschine schlechter ist als er sein könnte.

### Vorteile der Erfindung

Das erfindungsgemäße Verfahren zum Herstellen einer zweischichtigen Schleifenwicklung mit den Merkmalen des Hauptanspruchs hat den Vorteil, dass zumindest ein Teil der Schleifenverbinder innerhalb der durch die Schleifen der einzelnen Phasen gebildeten Wickelköpfe angeordnet sind. Somit lässt sich die entsprechend hergestellte zweischichtige Schleifenwicklung und hier ganz besonders der Wickelkopf mit den Schleifenverbindern besser kühlen. Die Strombelastbarkeit der Schleifenwicklung ist dadurch verbessert, die Stromerzeugung der mit dieser Schleifenwicklung ausgestatteten elektrischen Maschine ist dadurch hinsichtlich der Strombelastbarkeit und des Wirkungsgrads verbessert.

Durch die in den Unteransprüchen aufgeführten Maßnahmen sind vorteilhafte Weiterbildungen des Herstellungsverfahrens nach dem Hauptanspruch möglich. Eine weitere Verbesserung des Wickelkopfs und damit eine Verbesserung seines Strömungsverhaltens ergibt sich dann, wenn zumindest eine Schleife zweier aufeinander folgender Schleifen einer Phasenwicklung zwei Schleifenverbinder umgibt.

Eine besonders rationelle Fertigung einer zweischichtigen Schleifenwicklung ergibt sich besonders dann, wenn zunächst eine erste vollständige Phasenwicklung und anschließend zumindest eine weitere vollständige Phasenwicklung gewickelt wird. Bei einer derartigen Anordnung werden die Phasenwicklungen ohne Unterbrechung gewickelt, somit geht der Wicklungsvorgang besonders zügig vonstatten. Sieht man vor, wonach die in einem weiteren Schritt gewickelte Schleife eine erste Schleife der weiteren Phase ist und wiederum ein Schleifenverbinder in die erste Richtung gelegt wird, so ist dies eine weitere Voraussetzung dafür, einen nach außen hin besonders homogenen Wickelkopf bei der Schleifenwicklung zu erreichen. Durch die vorgesehene Abfolge von Wicklungsschritten sind die Schleifenverbinder innerhalb des Wickelkopfs angeordnet.

Ist vorgesehen, zumindest eine weitere erste Schleife zumindest einer weiteren Phase über zwei bereits gelegte Schleifenverbinder zu wickeln, so ist es möglich letztlich eine dreiphasige Schleifenwicklung zu erhalten, deren Schleifenverbinder allesamt innerhalb des Wickelkopfs angeordnet sind. Nach außen hin erscheint der Wickelkopf der dreiphasigen Schleifenwicklung einheitlich ohne besondere Unstetigkeitsstellen, die zu Geräuscherhöhungen und Kühlungsverschlechterung führen könnten.

Ein besonders rationeller Arbeitsablauf ergibt sich dann, wenn unmittelbar nach dem Wickeln jeweils erster Schleifen aller Phasen alle von diesen ersten Schleifen ausgehenden Schleifenverbinder bis zur Anfangsposition einer jeweiligen zweiten Schleife einer jeden Phase gelegt werden.

Eine weitere Verbesserung des Wickelkopfs ergibt sich dann, wenn die zweiten Schleifen einer jeden Phasenwicklung in der gleichen Reihenfolge wie die ersten Schleifen der Phasenwicklung gewickelt und jeweils von einem Schleifenverbinder gefolgt werden, der bis zur Anfangsposition einer jeweiligen weiteren ersten Schleife einer jeden Phasenwicklung reicht. Dieser Verfahrensschritt ist eine Bedingung einen einheitlichen Wickelkopf zu erreichen.

Um aus der auf den Wickelbalken gewickelten Schleifenwicklung letztlich eine zweischichtige Schleifenwicklung herzustellen, die in ein streifenförmiges, auf einer Seite mit Nuten und Zähnen versehenes Ständereisen eingelegt werden kann, ist vorgesehen, dass jede Phasenwicklung erste und zweite Schleifen abwechselnd nacheinander angeordnet hat und eine jede Schleife je zumindest eine erste und zweite Spulenseite aufweist, die sich gegenüberliegen, wobei nach dem Wickeln der Phasenwicklungen der Wickelbalken aus der Wicklung entfernt wird und die ersten und zweiten Schleifen so geschwenkt werden, dass je Phase die zumindest eine zweite Schleifenseite einer Schleife auf der zumindest einen ersten Schleifenseite der in Wicklungsrichtung nächsten Schleife der selben Phase zu liegen kommt.

Zur Herstellung dieser zweischichtigen Schleifenwicklung ist es wünschenswert, dass der Draht beim Biegen sich als nicht all zu störrisch erweist. Daher ist vorgesehen, dass das verwendete Drahtbündel aus mindestens zwei Einzeldrähten besteht, die vorzugsweise gleichzeitig gewickelt werden.

Schließlich ist ein Verfahren zur Herstellung eines Ständers einer elektrischen Maschine vorgesehen, wobei in einem ersten Schritt ein streifenförmiges, auf einer Seite mit Nuten und Zähnen versehene Ständereisen bereit gestellt wird und in einem nachfolgenden Schritt eine zweischichtige Schleifenwicklung in die Nuten eingelegt wird, die gemäß einem der Verfahren hergestellt ist, die im Rahmen dieser Beschreibung offenbart sind.

### Zeichnungen

In den Zeichnungen sind Ausführungsbeispiele des erfindungsgemäßen Verfahrens zum Herstellen einer zweischichtigen Schleifenwicklung dargestellt.

Es zeigen
- Figur 1: eine schematische Seitenansicht auf einen Wickelbalken, wobei jeweils die ersten zwei Schleifen von insgesamt drei Phasen sowie deren Schleifenverbinder dargestellt sind,
- Figur 2: eine schematische Ansicht einer zweischichtigen Schleifenwicklung gemäß Figur 1, deren schematische Darstellung der Schleifenverbinder (Verschaltung) und die Lage der Wicklung in einem Ständereisen,
- Figur 3: ein zweites Ausführungsbeispiel einer zweischichtigen Schleifenwicklung in schematischer Darstellung,
- Figur 4: die schematische Ansicht der zweischichtigen Schleifenwicklung aus Figur 3, deren schematische Darstellung der Schleifenverbinder (Verschaltung) eingelegt in ein streifenförmiges Ständereisen,
- Figur 5: ein drittes Ausführungsbeispiel einer zweischichtigen Schleifenwicklung,
- Figur 6: eine zweite Ansicht er zweischichtigen Schleifenwicklung aus Figur 5,
- Figur 7: eine Seitenansicht auf die Schleifenwicklung gemäß Figur 6,
- Figur 8: eine schematische Darstellung der Lage der zweischichtigen Schleifenwicklung aus den Figuren 5 bis 7, deren schematische Darstellung der Schleifenverbinder (Verschaltung) und deren Lage in einem streifenförmigen Ständereisen,
- Figur 9: eine Draufsicht auf die im Wesentlichen flache zweischichtige schematische Schleifenwicklung gemäß den Figuren 5 bis 8
- Figur 10: schematisch den Fertigungsablauf für ein Verfahren zur Herstellung eines Ständers mit Wicklung,
- Figur 11: schematisch ein Beispiel eines Drahtbündels.

### Beschreibung

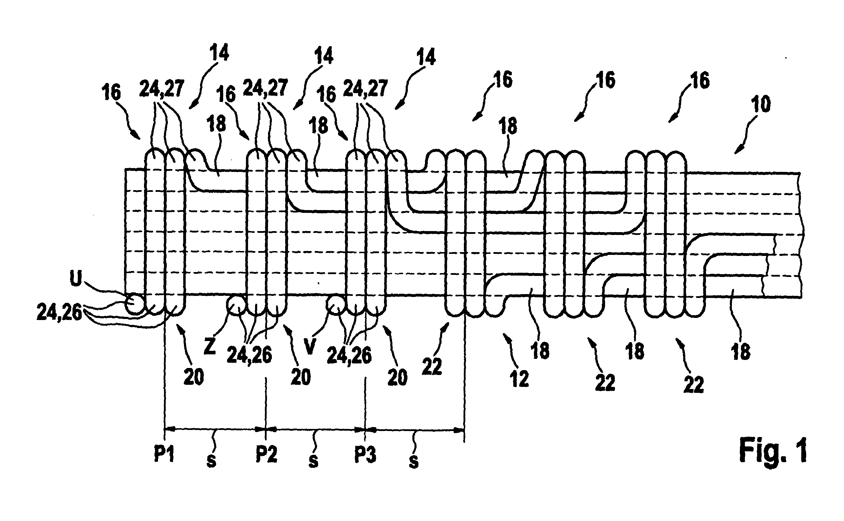

In Figur 1 ist ausschnittsweise ein sogenannter Wickelbalken 10 dargestellt, der als Hilfsmittel dient, um eine mehrphasige zweischichtige Schleifenwicklung für elektrische Maschinen herzustellen. Die Schleifenwicklung 12 besteht im dargestellten Ausführungsbeispiel aus insgesamt drei Phasenwicklungen 14. Diese Phasenwicklungen 14 haben je einen Wicklungsanfang U, Z bzw. V. Die einzelnen Phasenwicklungen 14 bestehen aus Schleifen 16 und Schleifenverbindern 18. Eine jede Phasenwicklung 14 hat sowohl sogenannte erste Schleifen 20, als auch zweite Schleifen 22. Die ersten Schleifen 20 und zweiten Schleifen 22 sind jeweils abwechselnd hineinander verschaltet und jeweils durch Schleifenverbinder 18 miteinander verbunden. Es folgt somit bei einer Phase einer ersten Schleife 20 ein Schleifenverbinder 18, diesem eine zweite Schleife 22, die wiederum über einen weiteren Schleifenverbinder 18 mit einer weiteren ersten Schleife 20 verbunden ist.

Die in Figur 1 dargestellte Schleifenwicklung 12 wird wie folgt hergestellt:
Zunächst wird an einer ersten Position P1 eine erste Schleife 20 um den Wickelbalken 10 herum mit einer vorbestimmten Anzahl an Schlingen gewickelt. Im Beispiel wird die erste Schleife 20 an der Position P1 so oft um den Wickelbalken 10 geschlungen, dass insgesamt sechs Schleifenseiten 24 am Wickelbalken 10 anliegen. An diese erste Schleife 20 der ersten Phasenwicklung 14 schließt sich ein nachfolgender Schleifenverbinder 18 an, der ebenfalls Teil der ersten Phasenwicklung 14 ist und in eine erste Richtung gelegt wird. Diese erste Richtung entspricht auch der Richtung, in der die erste Schleife 20 gewickelt ist. In Figur 1 entspricht dies der Richtung nach rechts. Diese erste Richtung entspricht später der Umfangsrichtung eines Ständers einer elektrischen Maschine. In einem weiteren bzw. späteren Schritt wird eine Schleife 16 einer weiteren Phasenwicklung 14 über den eben gewickelten Schleifenverbinder 18 an einer Position P2 gewickelt. Diese Schleife 16 ist wiederum eine erste Schleife 20; in diesem Fall jedoch die erste Schleife 20 der zweiten Phasenwicklung 14, deren Wicklungsanfang Z um den Abstand S vom ersten Wicklungsanfang U beabstandet ist. Auch in diesem Fall werden insgesamt sechs Schleifenseiten 24 um den Wickelbalken 10 gewickelt, wobei in diesem Fall der bereits gelegte Schleifenverbinder 18 der ersten Phasenwicklung 14 ebenfalls umschlungen ist bzw. wird. An die erste Schleife 20 der zweiten Phasenwicklung 14 schließt sich, wie bereits bei der ersten Phasenwicklung, ebenfalls ein Schleifenverbinder 18 an, der von der ersten Schleife 20 der zweiten Phasenwicklung 14 ausgeht und ebenfalls in die bereits erwähnte erste Richtung gelegt wird.

Zur Herstellung einer dreiphasigen zweischichtigen Schleifenwicklung ist es in diesem Fall notwendig, die bereits erwähnte dritte Phasenwicklung 14 mit dem Wicklungsanfang V zu wickeln. Der Wicklungsanfang V ist wiederum um den Abstand S vom Wicklungsanfang Z beabstandet. Von dieser Position P3 ausgehend, werden wiederum so viele Schleifenseiten 24 an den Wickelbalken 10 gelegt, dass insgesamt sechs Schleifenseiten 24 am Wickelbalken 10 anliegen. Die daraus entstehende erste Schleife 20 der dritten Phasenwicklung 14 umschlingt die beiden bereits gelegten Schleifenverbinder 18 der ersten und zweiten Phasenwicklung 14, die von der ersten Schleife 20 ausgehen. Von der ersten Schleife 20 der dritten Phasenwicklung 14 wird ebenfalls ein Schleifenverbinder 18 gelegt, der sich auch hier wiederum in die erste Richtung erstreckt.

Die Positionen P1, P2 und P3 sind vorzugsweise - wie auch die Wicklungsanfänge U, Z und V untereinander - jeweils um den Schritt S beabstandet.

Bei der in Figur 1 dargestellten Schleifenwicklung 12 ist insgesamt vorgesehen, dass zunächst eine erste Phasenwicklung 14 komplett gewickelt wird, anschließend die zweite Phasenwicklung komplett und daran anschließend - bei einer dreiphasigen Wicklung - die dritte Phasenwicklung 14 komplett gewickelt.

Damit die gemäß Figur 1 und der dazugehörigen Beschreibung hergestellte Schleifenwicklung 12 auch in ein streifenförmiges Ständereisen eingelegt werden kann, ist es in einem weiteren Schritt erforderlich, nach dem Wickeln der Phasenwicklungen 14 den Wickelbalken 10 aus dem Inneren der Schleifenwicklung 12 zu entfernen. Nach dem Entfernen des Wickelbalkens 10 werden die ersten Schleifen 20 und die zweiten Schleifen 22 einer jeden Phasenwicklung 14 so geschwenkt, dass die zumindest eine zweite Schleifenseite 27 einer Schleife 16 auf der zumindest einen ersten Schleifenseite 26 der in Wicklungsrichtung nächsten Schleife 16 einer Phasenwicklung zu liegen kommt.

Das bedeutet, dass die in Figur 1 dargestellten zweiten Schleifenseiten 27 einer Schleife 16 um die Position der ersten Schleifenseiten 26 der selben Schleife 16 so geschwenkt werden, dass die zweiten Schleifenseiten 27 der Schleife 16 einer Phasenwicklung 14 auf den ersten Schleifenseiten 26 der unmittelbar nächsten Schleife 16 der selben Phasenwicklung 14 zu liegen kommen. Dies gilt analog für die Spulenseiten der weiteren Phasenwicklungen 14.

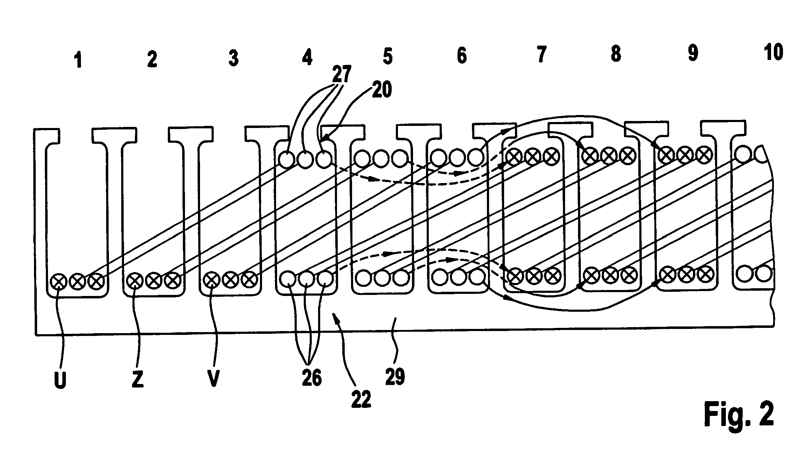

Es entsteht damit die in Figur 2 dargestellte charakteristische Anordnung der Schleifen 16 der Phasenwicklung 14. Nach dem Verschwenken der zweiten Schleifenseiten 27 liegen folglich bei einer dreiphasigen Schleifenwicklung 12 die zweiten Schleifen 27 der ersten Schleife 20 der ersten Phasenwicklung 14 über den ersten Schleifenseiten 26 der zweiten Schleife 22 der ersten Phasenwicklung 14, entsprechendes gilt analog für die Schleifenseiten 24 der ersten Schleife 20 der zweiten Phasenwicklung 14 und für die erste Schleife 20 der dritten Phasenwicklung 14.

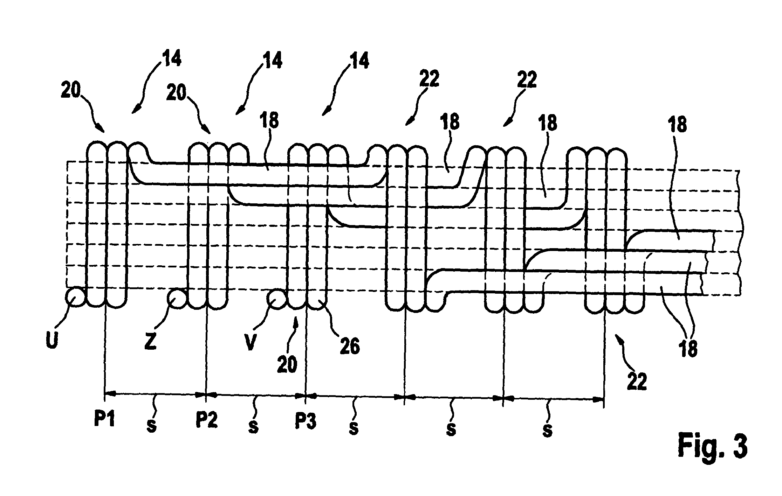

In Figur 3 ist ein verglichen mit der Schleifenwicklung 12 aus Figur 1 sehr ähnlicher Aufbau einer Schleifenwicklung 12 dargestellt. Auch bei der in Figur 3 dargestellten Wicklung 12 wird zunächst mit einer ersten Phasenwicklung 14 begonnen, wobei dies in diesem Fall nicht die Phasenwicklung 14 mit dem Wicklungsanfang U ist, sondern vielmehr die Phasenwicklung 14 mit dem Wicklungsanfang V.

Während bei der Schleifenwicklung 12 gemäß Figur 1 mit der ersten Schleife 20 begonnen wurde, deren erste Schleifenseite 26 in die Nut 1 eines streifenförmigen Ständerpakets eingelegt wird, siehe auch Figur 2, wird bei der in Figur 3 dargestellten Schleifenwicklung 12 mit der Phasenwicklung 14 begonnen, deren erste Schleifenseiten 26 in die Nut 3 eines streifenförmigen Ständereisens gelegt werden. Diese Phasenwicklung beginnt mit dem Wicklungsanfang V. Die Phasenwicklungen 14 werden zwar nach wie vor in die erste Richtung gewickelt, dies entspricht auch in Figur 3 der Richtung nach rechts, während entsprechend dem zuvor Gesagten nach dem Wickeln der ersten Phasenwicklung 14 um einen Schritt S entgegen der ersten Richtung beabstandet mit der zweiten Phasenwicklung 14 und dem entsprechenden Wicklungsanfang Z begonnen wird. Dementsprechend wird mit der dritten Phasenwicklung 14 und dem Wicklungsanfang U an einer Position begonnen, der von der ersten Schleife 20 der zuerst gewickelten Phasenwicklung 14 zwei Schritte S entfernt ist. Dementsprechend wird beim zweiten Ausführungsbeispiel gemäß Figur 3 in einem ersten Schritt ebenfalls eine erste Schleife 20 an der Position P3 einer ersten Phasenwicklung 14 gewickelt und nachfolgend ein Schleifenverbinder 18 der ersten Phasenwicklung 14 in die erste Richtung gelegt. Nach diesem Schleifenverbinder 18 wird eine zweite Schleife 22 mit dem Abstand von drei Schritten S von der ersten Schleife 20 der ersten Phasenwicklung 14 beabstandet gewickelt. Der zweiten Schleife 22 folgt wiederum ein Schleifenverbinder 18, der wiederum in die erste Richtung gelegt ist. Diese Abfolge vom erster und zweiter Schleife 20 und 22 wird so lange wiederholt, wie es erforderlich ist. Bei einem für eine dreiphasige Wicklung vorgesehenen streifenförmigen Ständereisen mit insgesamt 36 Nuten sind beispielsweise je Phasenwicklung 14 sechs erste Schleifen 20 und sechs zweite Schleifen 22 erforderlich. Bei einem für eine dreiphasige Wicklung vorgesehenen streifenförmigen Ständereisen mit 48 Nuten sind dies entsprechend acht erste Schleifen 20 und acht zweite Schleifen 22 je Phasenwicklung 14. Nach der ersten gewickelten Phasenwicklung 14 wird die zweite Phasenwicklung 14 mit dem Wicklungsanfang Z über die erste Phasenwicklung 14 gewickelt. Dazu wird entsprechend einem Schritt S in negativer Richtung der ersten Richtung von P3 ausgehend begonnen. Auch hier wird eine erste Schleife 20 gewickelt, der ein Schleifenverbinder 18 in der ersten Richtung folgt und dem sich wiederum eine zweite Schleife 22 anschließt. Der Schleifenverbinder 18 liegt dabei generell über den ersten Schleifen 20 bzw. unter den zweiten Schleifen 22. Der Schleifenverbinder 18 wird dementsprechend nicht von den Schleifen 16 der ersten Phasenwicklung 14 umgriffen. In analoger Art und Weise wird die dritte Phasenwicklung 14 mit dem Wicklungsanfang U gewickelt, wobei der Wicklungsanfang U um zwei Schritte S vom Wicklungsanfang V der ersten Phasenwicklung 14 beabstandet ist. An dieser Position P1 wird die erste Schleife 20 gewickelt, der der Schleifenverbinder 18 folgt und in der ersten Richtung gelegt ist. Dieser Schleifenverbinder 18 überdeckt die ersten Schleifen 20 der ersten und zweiten Phasenwicklung 14. Die zweite Schleife 22 der dritten Phasenwicklung überdeckt dabei zwangsläufig die Schleifenverbinder 18 der ersten und zweiten Phasenwicklung 14 zwischen den ersten Schleifen 20 bzw. zweiten Schleifen 22. Wie bereits beim ersten Ausführungsbeispiel nach Figur 1 sind die Wicklungsrichtungen der ersten Schleifen 20 den Wicklungsrichtungen der zweiten Schleifen 22 entgegengesetzt.

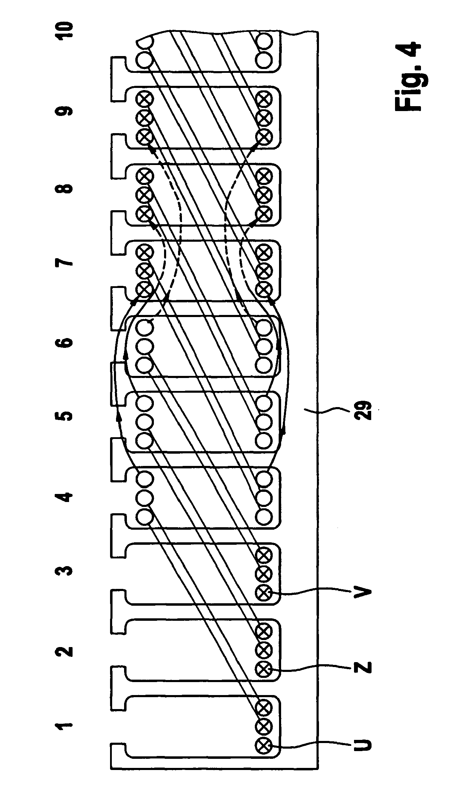

In Figur 4 ist dargestellt, wie die gemäß dem Ausführungsbeispiel gemäß Figur 3 hergestellte Schleifenwicklung 12 in das bereits erwähnte streifenförmige Ständereisen 29 eingelegt ist. Das Verschwenken der zweiten Spulenseiten 27 erfolgt genauso, wie bei der Schleifenwicklung 12 gemäß Ausführungsbeispiel nach Figur 1, so dass hierzu nicht weiter eingegangen werden braucht. Im Unterschied zum Ausführungsbeispiel nach Figur 1 bzw. 2 sind die Schleifenverbinder 18 - dies ergibt sich bereits aus Figur 3 - an anderen Positionen außerhalb der ersten bzw. zweiten Schleifen 20 bzw. 22.

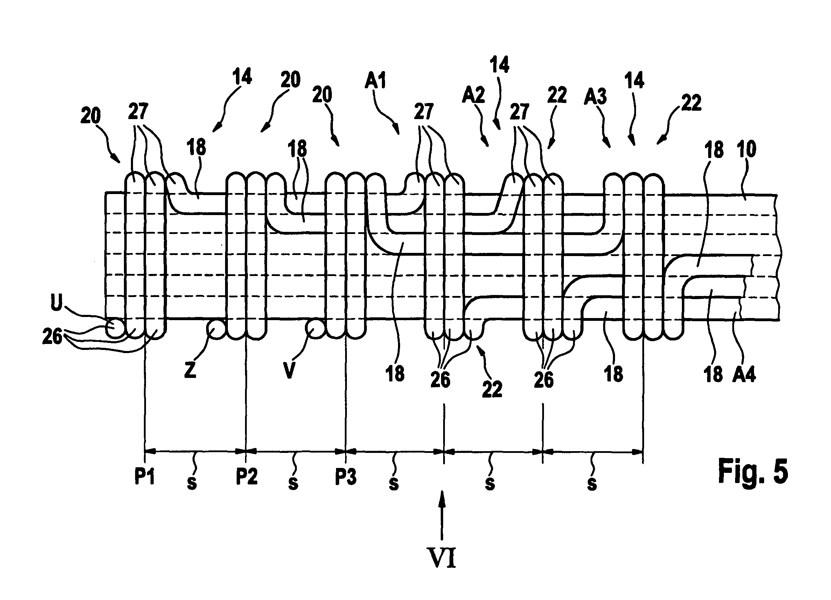

In Figur 5 ist ein drittes schematisches Ausführungsbeispiel einer Schleifenwicklung 12 dargestellt. Ausgehend von der Position P1 wird dort mit dem Wicklungsanfang U beginnend eine erste Phasenwicklung 14 gewickelt. Dazu wird in einem ersten Schritt eine erste Schleife 20 an der Position P1 um den Wickelbalken 10 geschlungen. Im Ausführungsbeispiel sind es wiederum drei erste Schleifenseiten 26 und drei zweite Schleifenseiten 27 je erster Schleife 20. Der letzten zweiten Schleifenseite 27 der ersten Schleife 20 folgt ein erster Schleifenverbinder 18, der in die erste Richtung - in Figur 5 nach rechts - gelegt wird. Dies geschieht unmittelbar an das Wickeln der ersten Schleife 20. Der Schleifenverbinder 18 wird bis zur Anfangsposition A1 der zweiten Schleife 22 der ersten Phasenwicklung 14 gelegt. Im nächsten Schritt wird die erste Schleife 20 der zweiten Phasenwicklung 14 gewickelt, wobei der Wicklungsanfang Z dieser zweiten Phasenwicklung 14 vom Wicklungsanfang U der ersten Phasenwicklung 14 mit dem Schritt S beabstandet ist. Vom Wicklungsanfang Z ausgehend, werden auch hier insgesamt drei erste Schleifenseiten 26 und drei zweite Schleifenseiten 27 um den Wickelbalken 10 und als nächster Schritt unmittelbar daran anschließend der erste Schleifenverbinder 18 zwischen der ersten Schleife 20 und der zweiten Schleife 22 der zweiten Phasenwicklung 14 gelegt. Der Schleifenverbinder 18 der ersten Phasenwicklung 14 wird somit von der ersten Schleife 20 der zweiten Phasenwicklung 14 umgriffen. Ausgehend von der zuletzt gewickelten zweiten Schleifenseite 27 der ersten Schleife 20 der zweiten Phasenwicklung 14 geht auch hier ein Schleifenverbinder 18 aus, der in Richtung der ersten Richtung gelegt wird. Dieser Schleifenverbinder 18 reicht bis zur Anfangsposition A2 der zweiten Schleife 22 der zweiten Phasenwicklung 14. In einem weiteren Schritt wird analog dazu mit dem Wickeln der dritten Phasenwicklung 14 begonnen, wobei auch hier der Schleifenverbinder 18 zwischen der ersten Schleife 20 und der zweiten Schleife 22 an einer Anfangsposition A3 der zweiten Schleife 22 endet. Die erste Schleife 20 der dritten Phasenwicklung 14 umgreift somit die zwei Schleifenverbinder 18 der zuvor gewickelten ersten und zweiten Phasenwicklung 14.

Ausgehend von der Anfangsposition A1 wird nunmehr die zweite Schleife 22 der ersten Phasenwicklung 14 gewickelt. Diese zweite Schleife 22 besteht in diesem Ausführungsbeispiel ebenso aus drei ersten Schleifenseiten 26 und drei zweiten Schleifenseiten 27. Die zweite Schleife 22 der ersten Phasenwicklung 14 wird demzufolge über die Schleifenverbinder 18 zwischen der ersten Schleife 20 und der zweiten Schleife 22 der zweiten und dritten Phasenwicklung 14 gelegt, so dass diese Schleifenverbinder 18 von der zweiten Schleife 22 der ersten Phasenwicklung 14 umgriffen sind. Nach dem Wickeln der letzten Schleifenseite 24 der zweiten Schleife 22 der ersten Phasenwicklung 14 wird wiederum im nächsten Verfahrensschritt ein Schleifenverbinder 18 in Richtung der ersten Richtung bis zu einer Anfangsposition A4 gelegt, wo die nächste erste Schleife 20 der ersten Phasenwicklung 14 mit einem sich daran anschließenden weiteren Schleifenverbinder 18 beginnen soll.

Der nächste Wickelschritt besteht darin - ausgehend von der Anfangsposition A2 - zur Wicklung der zweiten Schleife 22 der zweiten Phasenwicklung 14 wiederum drei erste Schleifenseiten 26 und drei zweite Schleifenseiten 27 zu wickeln, wobei die zweite Schleife 22 somit die Schleifenverbinder 18 der dritten Phasenwicklung 14 zwischen der ersten Schleife 20 und der zweiten Schleife 22 und den Schleifenverbinder 18 nach der zweiten Schleife 22 der ersten Phasenrichtung 14 umgibt.

Als nächstes wird, ausgehend von der Anfangsposition A3 die zweite Schleife 22 der dritten Phasenwicklung 14 mit drei ersten Schleifenseiten 26 und drei zweiten Schleifenseiten 27 um den Wickelbalken 10 gewickelt. Nach der letzten Schleifenseite 24 bzw. 26 wird von dieser ausgehend ebenfalls ein Schleifenverbinder 18 in Richtung der ersten Richtung gelegt. Die zweite Schleife 22 der dritten Phasenwicklung 14 umgreift in analoger Weise die Schleifenverbinder 18 der ersten und zweiten Phasenwicklung 14 nach den jeweils zweiten Schleifen 22.

Ausgehend von dem oben geschilderten Wicklungsschema wird dieses so lange wiederholt, bis sechs erste Schleifen 20 und sechs zweite Schleifen 22 für jede Phasenwicklung 14 gewickelt sind, so es sich um eine Schleifenwicklung 12 handelt, die für einen insgesamt 36 Nuten aufweisenden Ständer vorgesehen ist. So die Schleifenwicklung 12 für einen Ständer vorgesehen ist, der 48 Nuten aufweist, sind in analoger Weise jeweils acht erste Schleifen 20 und acht zweite Schleifen 22 je Phasenwicklung 14 vorzusehen.

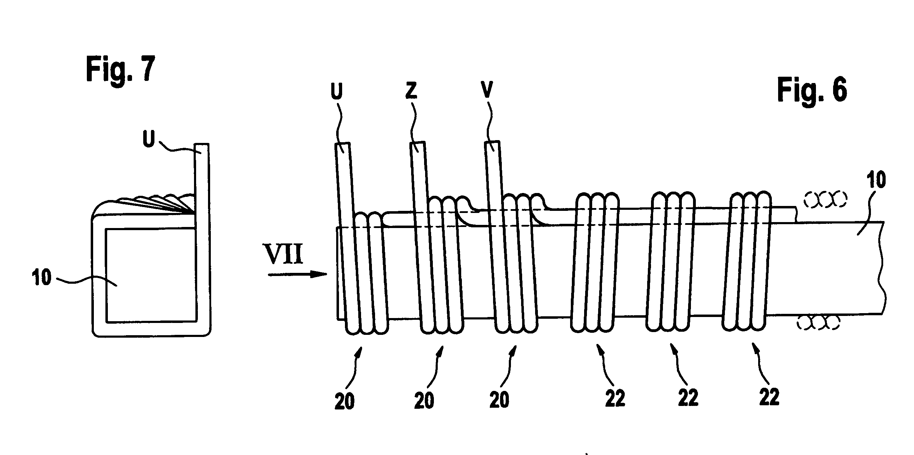

In Figur 6 ist eine Seitenansicht des Wickelbalkens 10 mit der Schleifenwicklung 12 aus Figur 5 dargestellt. Deutlich zu erkennen sind die Anordnungen der ersten Schleife 20 und zweiten Schleife 22 der einzelnen Phasenwicklungen 14.

Figur 7 zeigt eine entsprechende Seitenansicht, wie sie in Figur 5 bzw. Figur 6 angegeben ist. Aus dieser Ansicht sind deutlich die Erhebungen der einzelnen Schleifen 16 zu erkennen, wenn diese über die Schleifenverbinder 18 geführt werden.

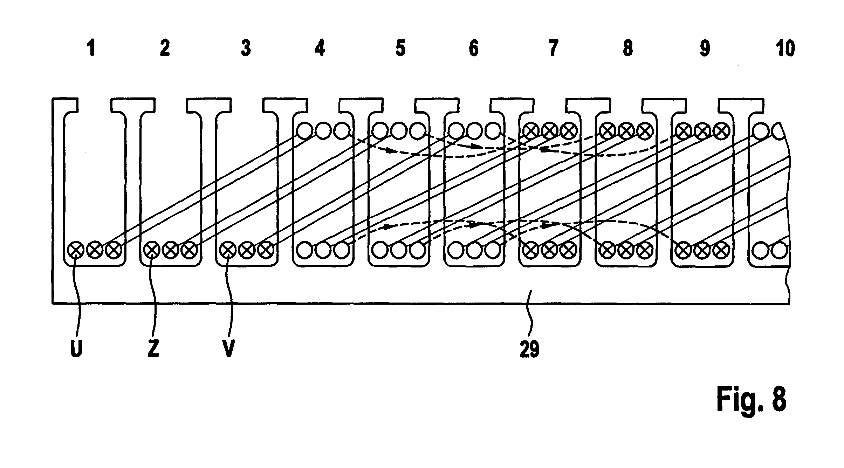

In Figur 8 ist, wie bereits zuvor in schematischer Weise dargestellt, eine Anordnung einer Schleifenwicklung 12 in einem streifenförmigen Ständereisenpaket 29 dargestellt. In Figur 8 ist die gemäß dem zu Figur 5 bis 7 beschriebenen Verfahren hergestellte Schleifenwicklung 12 eingesetzt, wobei auch hier, wie bereits bei den zuvor beschriebenen Schleifenwicklungen 12 die zweiten Schleifenseiten 27 um die ersten Schleifenseiten 26 gekippt sind.

Gemäß der Darstellung zu Figur 8 ist deutlich zu erkennen, dass die Schleifenverbinder 18 jeweils von Schleifenabschnitten überdeckt werden und somit innerhalb der Wickelköpfe der Schleifenwicklungen 12 bzw. Phasenwicklungen 14 angeordnet sind.

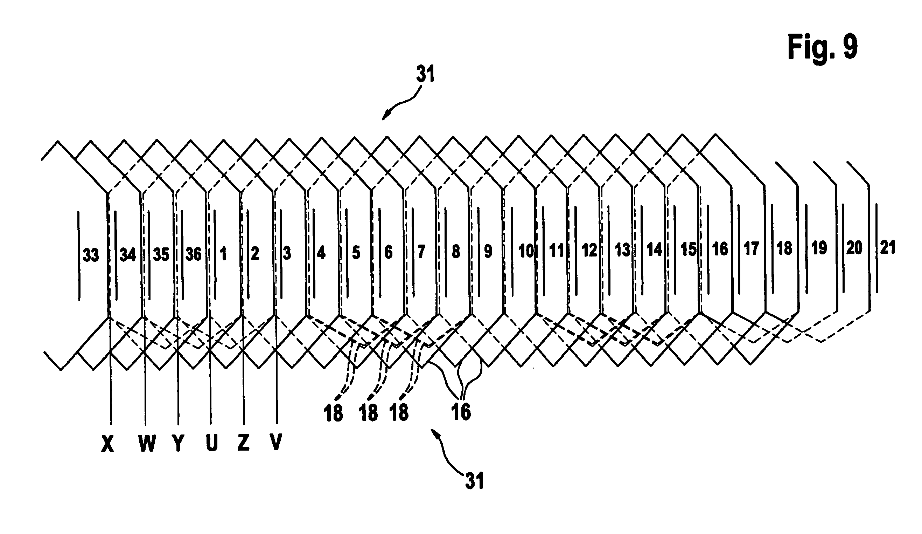

Figur 9 zeigt eine Abwicklung der in Figur 8 dargestellten Schleifenwicklung 12 in einer Draufsicht. Diese Draufsicht entspricht in etwa einer Ansicht von radial innen nach radial außen bei einem runden Ständer. Die Darstellung in Figur 9 ist etwas vereinfacht und zeigt in strichlinierter Darstellung die Lage der ersten Schleifenseiten 26 im sogenannten Nutgrund, während die zweiten Schleifenseiten 27 jeweils durchgezogen sind. Die Darstellung ist auch insofern vereinfacht, als dass die tatsächliche Anzahl an Windungen einer ersten Schleife 20 oder zweiten Schleife 22 nicht dargestellt ist.

Deutlich zu erkennen ist, dass die Schleifenverbinder 18 allesamt innerhalb der Wickelköpfe 31 bildenden Bereiche der Schleifen 16 sind. Stellt man eine Schleifenwicklung 12 her, die für insgesamt 36 Nuten vorgesehen ist, so ergibt sich ein aus insgesamt drei Schleifen 16 bzw. deren zweiten Schleifenseiten 27 gebildeter Wicklungsüberhang, der, wie in Figur 9 dargestellt, auf die ersten Schleifenseiten 26 der ersten Schleifen 20 in den Nuten 1, 2 und 3 gelegt wird. Die in der horizontalen Mitte der Schleifenwicklung 12 dargestellten Ziffern 1 bis 21 und 33 bis 36 unter Auslassung der Zahlen 22 bis 32 stellen die entsprechenden Nuten eines 36-nutigen Ständereisens dar.

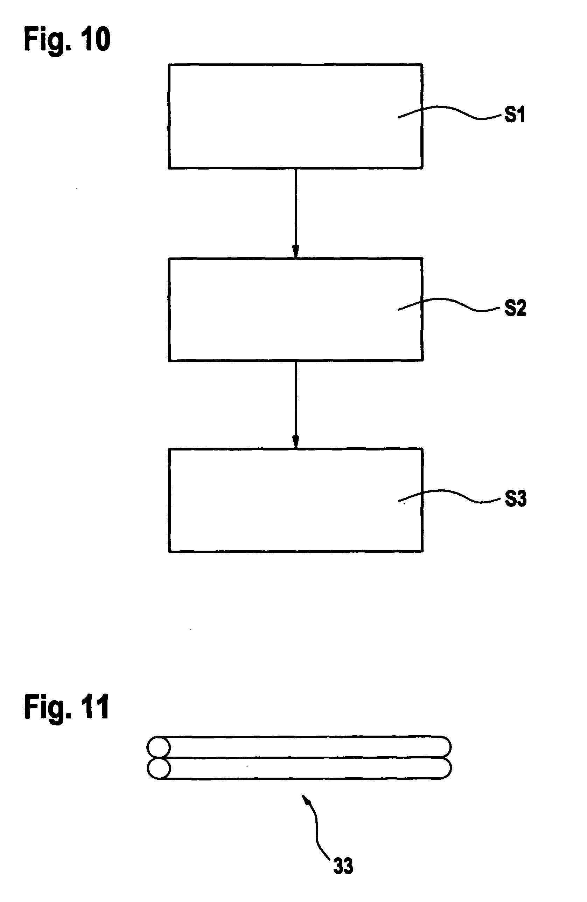

Figur 10 zeigt schematisch den Fertigungsablauf für ein Verfahren zur Herstellung eines Ständers, wobei in einem ersten Schritt S1 ein streifenförmiges, auf einer Seite mit Nuten und Zähnen versehenes Ständereisen 29 bereitgestellt wird und in einem nachfolgenden Schritt S2 eine zweischichtige Schleifenwicklung 12 in die Nuten eingelegt wird, die gemäß einem der zuvor beschriebenen Verfahren hergestellt ist und in einem dritten Schritt S3 die Baugruppe aus Ständereisen 29 und Schleifenwicklung 12 so rundgebogen wird, dass ein hohlzylindrischer Ständer entsteht.

Zusammenfassend lässt sich festhalten, dass ein Verfahren zum Herstellen einer zweischichtigen Schleifen wicklung 12 für mehrphasige elektrische Maschinen vorgeschlagen wird, wobei die zweischichtige Schleifenwicklung aus einem Drahtbündel hergestellt wird, das auf einen Wickelbalken 10 gewickelt wird, indem in einem ersten Schritt eine erste Schleife 20 einer ersten Phasenwicklung 14 gewickelt und nachfolgend ein Schleifenverbinder 18 der ersten Phasenwicklung 14 in eine erste Richtung gelegt wird, wobei in einem weiteren Schritt eine Schleife 16, 22 einer weiteren Phasenwicklung 14 über den Schleifenverbinder 18 gewickelt wird. Nach einer Ausgestaltung der Erfindung ist vorgesehen, wonach zumindest eine Schleife 16 zwei aufeinanderfolgende Schleifen 20 bzw. 22 einer Phasenwicklung 14 zwei Schleifenverbinder 18 umgibt. Die zwei aufeinanderfolgenden Schleifen 20 bzw. 22 sind durch einen Schleifenverbinder 18 verbunden. Nach einem Ausführungsbeispiel ist vorgesehen, zunächst einer erste vollständige Phasenwicklung 14 und anschließend zumindest eine weitere vollständige Phasenwicklung 14 zu wickeln.

Gemäß einem Ausführungsbeispiel ist vorgesehen, dass die in einem weiteren Schritt gewickelte Schleife 16 eine erste Schleife 20 der weiteren Phasenwicklung 14 ist und wiederum ein Schleifenverbinder 18 in die erste Richtung gelegt wird. Zur Herstellung einer dreiphasigen Schleifenwicklung mit einem besonders homogenen Wickelkopf 31 ist vorgesehen, über zwei bereits gelegte Schleifenverbinder 18 zumindest eine weitere erste Schleife 20 zumindest einer weiteren Phasenwicklung 14 zu wickeln. Im Rahmen eines Ausführungsbeispiels ist vorgesehen, nach dem Wickeln jeweils erster Schleifen 20 aller Phasen alle von diesen ersten Schleifen 20 ausgehenden Schleifenverbinder 18 bis zur Anfangsposition A1, A2, A3, einer jeweiligen zweiten Schleife 22 einer jeden Phasenwicklung 14 zu legen. Für den regelmäßigen Aufbau ist vorgesehen, die zweiten Schleifen 22 einer jeden Phasenwicklung 14 in der gleichen Reihenfolge wie die ersten Schleifen 20 der Phasenwicklung 14 zu wickeln und jeweils von einem Schleifenverbinder 18 folgen zu lassen, der bis zur Anfangsposition einer jeweiligen weiteren ersten Schleife 20 einer jeden Phasenwicklung 14 reicht.

Im Rahmen der Herstellung der Schleifenwicklung 12 ist vorgesehen, dass je Phasenwicklung 14 erste Schleifen 20 und zweite Schleifen 22 abwechselnd nacheinander und miteinander verbunden angeordnet sind und eine jede Schleife 20 bzw. 22, die zumindest eine erste und zweite Schleifenseite 26 bzw. 27 aufweist, die sich auf dem Wickelbalken 10 auf gegenüberliegenden Seiten befinden. Nach dem Wickeln der Phasenwicklungen 14 wird der Wickelbalken 10 aus der Wicklung 12 entfernt und die ersten und zweiten Schleifen 20 bzw. 22 so geschwenkt, dass die zumindest eine zweite Schleifenseite 27 einer Schleife 16 auf der zumindest einen ersten Schleifenseite 26 der in Wicklungsrichtung, d.h. hier Umfangsrichtung, des Ständereisens nächsten Schleife 16 zu liegen kommt.

Statt eines, wie in den Figuren 1 bis 10 skizzierten Einzeldrahts, welcher stellvertretend grundsätzlich für ein Drahtbündel steht, kann zur Fertigungserleichterung auch ein Drahtbündel 33 aus mindestens zwei zusammengefassten Einzeldrähten verwendet werden, siehe auch Figur 11. Grundsätzlich ist in dieser Beschreibung unter einem Drahtbündel auch ein Einzeldraht zu verstehen.

## Patentansprüche

1. Verfahren zum Herstellen einer zweischichtigen Schleifenwicklung (12) für mehrphasige elektrische Maschinen aus einem Drahtbündel (33), das auf einen Wickelbalken (10) gewickelt wird, indem in einem ersten Schritt eine erste Schleife (20) einer ersten Phasenwicklung (14) gewickelt und nachfolgend ein Schleifenverbinder (18) der ersten Phasenwicklung (14) in eine erste Richtung gelegt wird, wobei in einem weiteren Schritt eine Schleife (16) einer weiteren Phasenwicklung (14) über den Schleifenverbinder (18) gewickelt wird.

2. Verfahren nach Anspruch 1, wobei zumindest eine Schleife (16, 20, 22) zweier aufeinander folgender Schleifen einer Phasenwicklung (14) zwei Schleifenverbinder (18) umgibt.

3. Verfahren nach Anspruch 1 oder 2, wobei zunächst eine erste, vollständige Phasenwicklung (14) und anschließend zumindest eine weitere vollständige Phasenwicklung (14) gewickelt wird.

4. Verfahren nach Anspruch 1, wobei die in einem weiteren Schritt gewickelte Schleife (16) eine erste Schleife (20) der weiteren Phasenwicklung (14) ist und wiederum ein Schleifenverbinder (18) in die erste Richtung gelegt wird.

5. Verfahren nach Anspruch 4, wobei über zwei bereits gelegte Schleifenverbinder (18) zumindest eine weitere erste Schleife (20) zumindest einer weiteren Phasenwicklung gewickelt wird.

6. Verfahren nach Anspruch 1, 4 oder 5, wobei nach dem Wickeln jeweils erster Schleifen (20) aller Phasenwicklungen (14) alle von diesen ersten Schleifen (20) ausgehenden Schleifenverbinder (18) bis zur Anfangsposition (A1, A2, A3) einer jeweiligen zweiten Schleife (22) einer jeden Phasenwicklung (14) gelegt werden.

7. Verfahren nach Anspruch 6, wobei die zweiten Schleifen (22) einer jeden Phasenwicklung (14) in der gleichen Reihenfolge wie die ersten Schleifen (20) der Phasenwicklung (14) gewickelt und jeweils von einem Schleifenverbinder (18) gefolgt werden, der bis zur Anfangsposition (A1, A2, A3) einer jeweiligen weiteren ersten Schleife (20) einer jeden Phasenwicklung reicht.

8. Verfahren nach einem der vorstehenden Ansprüche, wobei je Phasenwicklung (14) erste Schleifen (20) und zweite Schleifen (22) abwechselnd nacheinander angeordnet sind und eine jede Schleife je zumindest eine erste Sch leifenseite (26) und eine zweite Schleifenseite (27) aufweist, die sich gegenüber liegen, wobei nach dem Wickeln der Phasenwicklung (14) der Wickelbalken (10) aus der Wicklung (12) entfernt wird und die ersten Schleifen (20) und zweiten Schleifen (22) so geschwenkt werden, dass die zumindest eine zweite Schleifenseite (27) einer Schleife (16) einer Phasenwicklung (14) auf der zumindest einen ersten Schleifenseite (26) der in Wicklungsrichtung nächsten Schleife (16, 20, 22) der selben Phasenwicklung (14) zu liegen kommt.

9. Verfahren nach einem der vorstehenden Ansprüche, wobei das Drahtbündel (33) aus mindestens zwei Einzeldrähten besteht.

10. Verfahren zur Herstellung eines Ständers, wobei in einem ersten Schritt ein streifenformiges, auf einer Seite mit Nuten und Zähnen versehenes Ständereisen (29) bereit gestellt und in einem nachfolgenden Schritt eine zweischichtige Schleifenwicklung (12) in die Nuten eingelegt wird, die gemäß einem Verfahren nach einem der vorhergehenden Ansprüche hergestellt ist und in einem weiteren Schritt die Baugruppe aus Ständereisen (29) und Schleifenwicklung (12) so rundgebogen wird, dass ein hohlzylindrischer Ständer entsteht.

## Claims

1. Method for producing a two-layer lap winding (12) for polyphase electrical machines, comprising a bundle (33) of wires which is wound onto a winding bar (10), by a first coil unit (20) of a first phase winding (14) being wound in a first step and, then, a coil unit connector (18) of the first phase winding (14) being laid in a first direction, with a coil unit (16) of a further phase winding (14) being wound over the coil unit connector (18) in a further step.

2. Method according to Claim 1, with at least one coil unit (16, 20, 22) of two successive coil units of a phase winding (14) surrounding two coil unit connectors (18).

3. Method according to Claim 1 or 2, with first a first complete phase winding (14) and then at least one further complete phase winding (14) being wound.

4. Method according to Claim 1, with the coil unit (16) which is wound in a further step being a first coil unit (20) of the further phase winding (14) and a coil unit connector (18) again being laid in the first direction.

5. Method according to Claim 4, with at least one further first coil unit (20) of at least one further phase winding being wound over two coil unit connectors (18) which are already laid.

6. Method according to Claim 1, 4 or 5, with, after the respectively first coil units (20) of all the phase windings (14) are wound, all the coil unit connectors (18) starting from these first coil units (20) being laid as far as the starting position (A1, A2, A3) of a respective second coil unit (22) of each phase winding (14).

7. Method according to Claim 6, with the second coil units (22) of each phase winding (14) being wound in the same order as the first coil units (20) of the phase winding (14) and in each case being followed by a coil unit connector (18) which reaches as far as the starting position (A1, A2, A3) of a respective further first coil unit (20) of each phase winding.

8. Method according to one of the preceding claims, with, for each phase winding (14), first coil units (20) and second coil units (22) being arranged alternately in succession, and each coil unit in each case having at least a first coil unit side (26) and a second coil unit side (27), which coil unit sides are situated opposite one another, with the winding bar (10) being removed from the winding (12) after the phase winding (14) is wound, and the first coil units (20) and second coil units (22) being pivoted such that the at least one second coil unit side (27) of a coil unit (16) of a phase winding (14) comes to rest on the at least one first coil unit side (26) of that coil unit (16, 20, 22) of the same phase winding (14) which is next in the winding direction.

9. Method according to one of the preceding claims, with the bundle (33) of wires comprising at least two individual wires.

10. Method for producing a stator, with a strip-like iron stator core (29) which is provided with slots and teeth on one side being provided in a first step, and a two-layer lap winding (12) being inserted into the slots in a subsequent step, the said two-layer lap winding being produced in accordance with a method according to one of the preceding claims, and, in a further step, the assembly comprising iron stator core (29) and lap winding (12) being bent around in such a way that a hollow-cylindrical stator is produced.

## Revendications

1. Procédé de fabrication d'un enroulement de boucle (12) en deux couches pour machines électriques polyphasées à partir d'un faisceau (33) de fils enroulé sur un mandrin d'enroulement (10), dans lequel une première boucle (20) d'un premier enroulement de phase (14) est enroulée au cours d'une première étape et ensuite un raccord (18) de boucle du premier enroulement de phase (14) est posé dans une première direction, tandis que dans une autre étape, une boucle (16) d'un autre enroulement de phase (14) est enroulée au-dessus du raccord (18) de boucle.

2. Procédé selon la revendication 1, dans lequel au moins une boucle (16, 20, 22) parmi deux boucles successives d'un enroulement de phase (14) entoure deux raccords (18) de boucles.

3. Procédé selon les revendications 1 ou 2, dans lequel un premier enroulement de phase (14) complet est enroulé et ensuite au moins un autre enroulement de phase (14) complet est enroulé.

4. Procédé selon la revendication 1, dans lequel la boucle (16) enroulée au cours d'une autre étape est une première boucle (20) de l'autre enroulement de phase (14) et un raccord (18) de boucles est de nouveau placé dans la première direction.

5. Procédé selon la revendication 4, dans lequel au moins une autre première boucle (20) d'au moins un autre enroulement de phase est enroulée au-dessus de deux raccords (18) de boucles déjà placés.

6. Procédé selon les revendications 1, 4 ou 5, dans lequel après l'enroulement de chaque première boucle (20) de tous les enroulements de phase (14), tous les raccords (18) de boucles qui partent de cette première boucle (20) sont placés jusqu'à la position initiale (A1, A2, A3) de chaque deuxième boucle (22) de chaque enroulement de phase (14).

7. Procédé selon la revendication 6, dans lequel les deuxièmes boucles (22) de chaque enroulement de phase (14) sont enroulées dans la même succession que les premières boucles (20) de l'enroulement de phase (14) et sont chacune suivies par un raccord (18) de boucles qui s'étend jusqu'à la position initiale (A1, A2, A3) de chaque autre première boucle (20) de chaque enroulement de phase.

8. Procédé selon l'une des revendications précédentes, dans lequel pour chaque enroulement de phase (14), des premières boucles (20) et des deuxièmes boucles (22) sont placées successivement et en alternance, chaque boucle présentant au moins un premier côté (26) de boucle et un deuxième côté (27) de boucle situés l'un en face de l'autre, tandis qu'après l'enroulement de l'enroulement de phase (14), le mandrin d'enroulement (10) est enlevé de l'enroulement (12) et les premières boucles (20) et deuxièmes boucles (22) sont inclinées de telle sorte que le ou les deuxièmes côtés (27) d'une boucle (16) d'un enroulement de phase (14) viennent se placer sur le ou les premiers côtés (26) de la boucle suivante (16, 20, 22) dans la direction d'enroulement du même enroulement de phase (14).

9. Procédé selon l'une des revendications précédentes, dans lequel le faisceau de fils (33) est constitué d'au moins deux fils distincts.

10. Procédé de fabrication d'un stator, dans lequel un fer de stator (29) en forme de ruban et dont un côté est doté de rainures et de dents est préparé au cours d'une première étape, un enroulement (12) de boucle en deux couches réalisé avec le procédé selon l'une des revendications précédentes est placé dans les rainures dans une étape ultérieure et l'ensemble constitué du fer de stator (29) et de l'enroulement de boucle (12) est arrondi dans une autre étape de manière à obtenir un stator cylindrique creux.
